# EUROPÄISCHE PATENTSCHRIFT

(11) **EP 2 920 090 B1**
(45) Veröffentlichungstag und Bekanntmachung des Hinweises auf die Patenterteilung: **05.10.2016**
(21) Anmeldenummer: 13791799.3
(22) Anmeldetag: 13.11.2013
(51) Int. Cl.: B65G 13/073

(54) **FRIKTIONSANTRIEB ZUR KRAFTÜBERTRAGUNG, INSBESONDERE FÜR EINE TRANSPORTFÖRDEREINRICHTUNG**
FRICTION DRIVE FOR FORCE TRANSMISSION, IN PARTICULAR FOR A TRANSPORT CONVEYING DEVICE
ENTRAÎNEMENT À FRICTION POUR LA TRANSMISSION DE FORCE, EN PARTICULIER POUR UN DISPOSITIF TRANSPORTEUR

(30) Priorität: 19.11.2012 DE 202012104459 U; 08.07.2013 DE 202013102994 U
(43) Veröffentlichungstag der Anmeldung: 23.09.2015
(73) Patentinhaber: Kiener Maschinenbau GmbH, 73466 Lauchheim (DE)
(72) Erfinder: KIENER, Waldemar, 73466 Lauchheim (DE); ABELE, Paul, 73434 Aalen-Fachsenfeld (DE)
(74) Vertreter: Mammel und Maser
(86) Internationale Anmeldenummer: PCT/EP2013/073708
(87) Internationale Veröffentlichungsnummer: WO 2014/076124

(56) Entgegenhaltungen:
- EP-A1- 1 418 138
- DE-A1- 3 222 177
- DE-A1- 4 238 296
- FR-A1- 2 629 158
- US-A- 4 103 516

## Beschreibung

Die Erfindung betrifft einen Friktionsantrieb zur Kraftübertragung, insbesondere für eine Transportfördereinrichtung, durch welche ein Übertragungsmoment von einem Antriebselement auf ein Abtriebselement einstellbar ist.

Friktionsantriebe zur Kraftübertragung können beispielsweise bei Transporteinrichtungen eingesetzt werden. Bei Transportfördereinrichtungen werden beispielsweise mittels Laufrollen Werkstückträger von einer Bearbeitungsstation zur nächsten Bearbeitungsstation transportiert. Aufgrund der anstehenden Bearbeitungsschritte in den Bearbeitungsstationen werden die Werkstückträger in der Bearbeitungsposition gestoppt. Über einen Antrieb der Transportfördereinrichtung wird ein Antriebsmoment auf ein Antriebselement übertragen, welches dieses Antriebsmoment auf ein Abtriebselement weiterleitet, welches beispielsweise eine Transportrolle aufnimmt. Durch einen solchen Friktionsantrieb kann sowohl eine Weitertaktung der Werkstückträger als auch eine Entkopplung zwischen dem Antriebselement und dem Abtriebselement, insbesondere in einer Stoppposition des Werkstückträgers, in einer Bearbeitungsstation erzielt werden.

Aus der EP 1 418 138 A1 ist ein gattungsgemäßes Friktionsantrieb zur Kraftübertragung mit einem Antriebselement und einem Abtriebselement sowie mit einer dazwischen wirkenden Momentenbegrenzungseinrichtung bekannt. Ein von dem Antriebselement eingeleitetes Antriebsmoment wird bis zu einem mittels der Momentenbegrenzungseinrichtung einstellbaren Übertragungselement auf das Abtriebselement übertragen. Zwischen der Spannvorrichtung und der Momentenbegrenzungseinrichtung ist eine Drehentkopplungsvorrichtung vorgesehen, wobei zumindest ein Wälzlager der Drehentkopplungseinrichtung mit seinem Innenring axial durch die Spannvorrichtung verschiebbar auf dem Abtriebselement angeordnet ist.

Aus der US 4,103,516 ist des Weiteren ein analoger Friktionsantrieb zur Kraftübertragung bekannt.

Der Erfindung liegt die Aufgabe zugrunde, einen Friktionsantrieb zur Kraftübertragung vorzuschlagen, welcher nahezu verschleißfrei arbeitet.

Diese Aufgabe wird durch einen Friktionsantrieb zur Kraftübertragung mit den Merkmalen des Anspruchs 1 gelöst. Dieser umfasst eine zwischen dem Antriebselement und dem Abtriebselement wirkende Momentenbegrenzungseinrichtung, welche zumindest ein Wälzlager mit einem Innenring und einem Außenring sowie dazwischen angeordneten Wälzkörpern umfasst, und welche mit einer Spannvorrichtung den Innenring und den Außenring von dem zumindest einen Wälzlager gegeneinander in axialer Richtung verschiebt oder in radialer Richtung zueinander verspannt, wodurch ein maximales Übertragungsmoment einstellbar ist. Durch die axiale Verschiebung des Innenrings zum Außenring eines solchen Wälzlagers kann eine vorbestimmte Reibung und somit ein Übertragungsmoment einstellbar sein, mit welchem ein Antriebsmoment von dem Antriebselement auf das Abtriebselement übertragbar ist. Sofern an dem Abtriebselement ein über das einstellbare Übertragungsmoment hinaus gehendes Moment wirkt, wird durch die Momentenbegrenzungseinrichtung ein Freilauf aktiviert, das heißt, dass das Antriebselement gegenüber dem Abtriebselement frei rotieren kann, ohne dass es zu Beschädigungen kommt. Durch den Einsatz der Wälzlager, bei welchen die Laufbahn des Innenrings und des Außenrings als auch der Wälzkörper gehärtet sind, kann eine nahezu verschleißfreie Momentenbegrenzungseinrichtung ausgebildet sein, die darüber hinaus mittels der Spanneinrichtung in einfacher Weise auf vorbestimmte Übertragungsmomente wahlweise einstellbar ist. Dadurch können definierte Antriebsmomente übertragen werden. Zwischen der Spanneinrichtung und der Momentenbegrenzungseinrichtung ist zumindest eine Drehmomententkopplungsvorrichtung vorgesehen. Dadurch übt die Spanneinrichtung ausschließlich in axialer Richtung wirkende Kräfte auf den Innen- oder Außenring des zumindest einen Wälzlagers aus, ohne dass eine zusätzliche Reibung zwischen dem zumindest einen Wälzlager der Momentenbegrenzungseinrichtung über die Spanneinrichtung wirkt. Des Weiteren ist zwischen dem Innenring des Wälzlagers der Momentenbegrenzungseinrichtung und einem Wellenabschnitt des Abtriebselementes ein Ringspalt vorgesehen, in welchem zumindest zwei mit Abstand zueinander angeordnete Dichtungselemente angeordnet sind. Diese Anordnung weist den Vorteil auf, dass die axiale Verschiebbarkeit des Wälzlagers der Drehentkopplungseinrichtung verbessert wird. Diese Verschiebbarkeit kann selbst dann aufrecht erhalten werden, sofern beim Aufbringen einer Spannkraft durch die Spannvorrichtung eine Veränderung im Durchmesser des Innenrings des Wälzlagers erfolgen sollte.

Die Drehentkopplungsvorrichtung ist bevorzugt durch eine Gleit- oder Wälzlagerung ausgebildet. Insbesondere bei einer Walzlagerung kann ein hohes Maß an Reibungsreduzierung erzielt werden. Die Drehentkopplungseinrichtung ist bevorzugt durch zumindest ein Wälzlager ausgebildet. Dadurch kann eine Baugleichheit der Momentenbegrenzungseinrichtung und der Drehentkopplungsvorrichtung gegeben sein.

Die auf die Momentenbegrenzungseinrichtung wirkende Spanneinrichtung umfasst bevorzugt zumindest ein Federelement und ein Einstellelement, durch welches die Verspannkraft in axialer oder radialer Richtung auf den Innen- oder Außenring des Wälzlagers der Momentenbegrenzungseinrichtung einstellbar ist. Diese Spanneinrichtung kann konstruktiv einfach aufgebaut sein, wobei durch das Einstellelement eine dosierte Aufbringung der Verspannkraft ermöglicht ist.

Das zumindest eine Federelement der Spanneinrichtung ist bevorzugt als Tellerfeder oder Tellerfederpaket ausgebildet. Dadurch kann eine kleinbauende Anordnung mit einer hohen Verspannkraft erzielt werden. Alternativ kann auch ein Druckspiralfederelement, ein Blattfederelement, ein kunststoffelastisches Element oder dergleichen eingesetzt werden.

Die Spanneinrichtung ist bevorzugt auf oder in dem Abtriebselement, insbesondere einer Abtriebswelle, angeordnet, wobei das Einstellelement an oder in dem Abtriebselement angreift und axial, vorzugsweise in Richtung der Längsachse des Abtriebselementes, einstellbar ist. Dadurch können eine konstruktiv platzsparende Anordnung sowie ein einfacher Aufbau gegeben sein. In Abhängigkeit der Zugänglichkeit kann die eine oder andere Alternative gewählt werden, so dass auch eine Zugänglichkeit von außen auf eine in einem Gehäuse oder einem Profil angeordnete Spannvorrichtung möglich ist.

Das zumindest eine Wälzlager der Momentenbegrenzungseinrichtung ist mit dem Innenring rotationsfest auf dem Antriebselement angeordnet und liegt an einer Schulter am Antriebselement an, welches der Richtung der Verspannkraft entgegenwirkt. Dadurch kann das zumindest eine Wälzlager mit seinem Innenring lagefixiert zum Antriebselement aufgenommen werden, so dass eine in axialer Richtung wirkende Verspannkraft den Außenring gegenüber dem Innenring versetzt, um eine erhöhte Reibung aufzubringen. Beispielsweise kann bei einem als Antriebszahnrad ausgebildeten Antriebselement ein geringer axialer Versatz gegenüber dem Abtriebselement unproblematisch aufgrund der Zahneingriffsbreite sein, so dass eine einfache Einstellung eines Übertragungsmomentes einerseits und eine wirksame Übertragung des Antriebsmomentes über das Antriebselement andererseits gegeben ist.

Eine bevorzugte Ausführungsform des Friktionsantriebes sieht zwischen dem Außenring des Wälzlagers der Momentenbegrenzungseinrichtung und dem Wälzlager der Drehentkopplungsvorrichtung ein Distanzelement, insbesondere eine Distanzscheibe, vor. Bei dieser Ausführungsform greift die Spanneinrichtung bevorzugt an den Innenring des Wälzlagers der Drehentkopplungseinrichtung an, wobei die Axialkraft über den Außenring des Wälzlagers der Drehentkopplungseinrichtung auf den Außenring des Wälzlagers der Momentenbegrenzungseinrichtung übertragen wird. Durch die Distanzscheibe ist auch ein axialer Versatz zwischen dem Innenring und dem Außenring des Wälzlagers der Drehentkopplungseinrichtung ermöglicht, so dass dieses ebenso als Friktionselement wie auch das Wälzlager der Momentenbegrenzungseinrichtung einsetzbar sein kann.

Des Weiteren liegt bevorzugt das zumindest eine Wälzlager der Momentenbegrenzungseinrichtung mit seinem Außenring an einer Schulter des Antriebselementes an, welche entfernt zur Spannvorrichtung an dem Antriebselement angeordnet ist. Dadurch kann wiederum eine definierte Aufnahmepositionierung des zumindest einen Wälzlagers zum Antriebselement gegeben sein.

Das Wälzlager der Momentenbegrenzungseinrichtung und das Wälzlager der Drehentkopplungseinrichtung sind bevorzugt als Schrägkugellager, als radial verspanntes Kugellager, als Rollenlager oder Kegelrollenlager ausgebildet, welche benachbart und spiegelbildlich zueinander ausgerichtet sind. Dadurch kann die Drehentkopplungsvorrichtung eine Doppelfunktion übernehmen: Zum einen die Drehentkopplung und zum anderen die Funktion für ein einstellbares Übertragungsmoment analog zum Wälzlager der Momentenbegrenzungseinrichtung. Dadurch können bei kleinem Bauraum auch hohe Übertragungsmomente einstellbar sein.

Das Antriebselement ist bevorzugt als Antriebswelle ausgebildet, welche einen Aufnahmeabschnitt, vorzugsweise für eine Laufrolle oder Tragrolle, aufweist. Dadurch kann in einfacher Weise eine Anbindung verschiedener Antriebsrollen für zum Beispiel Werkstückträger oder Werkstücke zum Transport durch eine Fördereinrichtung an das Abtriebselement gegeben sein, um eine Vielzahl von Anwendungen zu ermöglichen.

Das Antriebselement ist bevorzugt als Antriebszahnrad ausgebildet, welches von einem Zwischenzahnrad oder einem Motor angetrieben wird. Diese Ausgestaltung ermöglicht, dass beispielsweise beim Einsatz in einer Transportfördereinrichtung mehrere solcher Friktionsantriebe hintereinander anordenbar sind, die mit Zwischenzahnrädern unmittelbar antriebsverbunden werden und dadurch ein einfacher und konstruktiver Aufbau gegeben ist.

Der Friktionsantrieb ist bevorzugt mit weiteren Friktionsantrieben in einer Transportfördereinrichtung vorgesehen, durch welchen Werkstückträger oder Werkstücke in Transportrichtung verfahrbar angetrieben werden. Diese Friktionsantriebe weisen den Vorteil auf, dass diese kleinbauend ausgebildet und im Trägerprofil in einfacher Weise integrierbar sind. Zusätzlich können über einen Antrieb mehrere in Reihe geschaltete Friktionsantriebe gleichzeitig für den Antrieb eines Werkstückträgers oder Werkstücks sorgen.

Eine weitere bevorzugte Ausführungsform sieht vor, dass das zumindest eine Dichtungselement in einer umlaufenden Nut im Wellenabschnitt des Abtriebselementes angeordnet ist. Dadurch ist eine Bearbeitung des gehärteten Innenrings des Wälzlagers nicht erforderlich. Bevorzugt ist die Tiefe der umlaufenden Nut derart vorgesehen, dass darin eingesetzte Dichtungselemente gegenüber dem Außenumfang des Wellenabschnitts geringfügig erhaben sind.

Des Weiteren ist bevorzugt in dem zwischen den Dichtungselementen begrenzten Ringspalt ein Schmier- und/oder Korrosionsmedium vorgesehen. Dadurch wird zum einen die axiale Verschiebbarkeit verbessert und zum anderen eine Spaltkorrosion vermieden.

Eine weitere bevorzugte Ausführungsform der Erfindung sieht eine Momentenbegrenzungseinrichtung und eine Drehentkopplungseinrichtung vor, die durch zumindest ein gemeinsames Gleit- oder Wälzlager ausgebildet sind. Dadurch kann eine bauraumreduzierte Anordnung ermöglicht sein. Diese Ausführungsform ist insbesondere bei der Aufbringung einer Spannkraft in radialer Richtung vorgesehen.

Eine bevorzugte Ausführungsform der Erfindung sieht vor, dass die Spannvorrichtung durch einen äußeren und einen inneren Spannring gebildet ist, zwischen denen das zumindest eine Gleit- oder Wälzlager der Momentenbegrenzungseinrichtung positioniert ist und am äußeren oder inneren Spannring ein Spannelement angreift, welches in radialer Richtung eine Verspannung des inneren und äußeren Spannrings erzeugt. Dadurch kann auch auf das dazwischen angeordnete Gleit- oder Wälzlager eine erhöhte Anpresskraft wirken, wodurch die Reibkraft zur Übertragung von Drehmomenten einstellbar ist.

Bevorzugt ist als Spannelement zumindest ein Klemm- oder Spannkonus vorgesehen. Alternativ kann das Spannelement auch mit einer Übermaßpassung ausgebildet sein. Dies ermöglicht eine kleinbauende Ausführungsform eines Spannelementes, welches hohe Spannkräfte in radialer Richtung erzeugen kann.

Eine weitere bevorzugte Ausführungsform der Erfindung sieht vor, dass der Friktionsantrieb mehrere aneinander gereihte Momentenbegrenzungseinrichtungen aufweist. Diese können beispielsweise in Form eines Planetengetriebes vorgesehen sein, so dass dadurch eine Addition der Friktionsmomente ermöglicht ist. Dadurch kann auch ein größerer Bereich zur Übertragung von Friktionsmomenten angesteuert werden.

Eine weitere alternative und bevorzugte Ausführungsform der Erfindung sieht vor, dass die Spannvorrichtung ein Einstellelement umfasst, welches als Einstellschraube ausgebildet ist, die in einer Bohrung des Abtriebselementes angeordnet ist und ein als Druckhülse mit einem die Bohrung durchquerenden Mitnahmestift ausgebildetes Druckstück in axialer Richtung betätigt. Dadurch wird eine stirnseitige Betätigung der Spannvorrichtung ermöglicht. Sofern die Stirnseite des Abtriebselementes in einer Gehäusewand liegt, kann somit eine einfache Einstellung des Friktionsantriebes zur Kraftübertragung von außen ermöglicht sein.

Des Weiteren ist bevorzugt zwischen dem Mitnahmestift und der Einstellschraube ein Druckbolzen vorgesehen, der vorzugsweise ein Dichtungselement aufweist und die Bohrung zum Druckbolzen abdichtet. Dadurch kann einerseits eine Einstellung und Betätigung der Spannvorrichtung von außen und andererseits eine Abdichtung zu einem Innenraum eines Gehäuses oder Profils gegeben sein, in welchem der Friktionsantrieb angeordnet ist. Zudem kann die Führung des Druckbolzens in der Bohrung durch das Dichtungselement unterstützt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Antriebsmoduls einer Transportfördereinrichtung mit dem erfindungsgemäßen Friktionsantrieb,
Figur 2 eine schematische Schnittansicht des erfindungsgemäßen Friktionsantriebs gemäß Figur 1,
Figur 3 eine schematische Schnittansicht einer alternativen Ausführungsform des erfindungsgemäßen Friktionsantriebs gemäß Figur 1,
Figur 4 eine schematische Schnittansicht einer weiteren alternativen Ausführungsform des Friktionsantriebs gemäß Figur 1,
Figur 5 eine schematische Schnittansicht einer weiteren alternativen Ausführungsform des erfindungsgemäßen Friktionsantriebs gemäß Figur 1 und
Figur 6 eine schematische Schnittansicht einer weiteren alternativen Ausführungsform des erfindungsgemäßen Friktionsantriebs gemäß Figur 1.

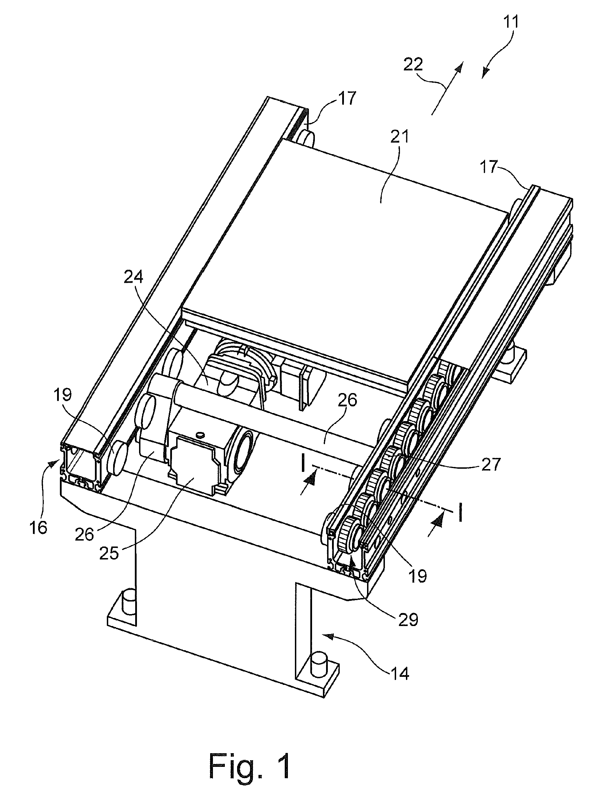

In Figur 1 ist perspektivisch ein Antriebsmodul 11 einer Transportfördereinrichtung dargestellt, welche weitere Transfermodule und/oder Arbeitsstationen sowie gegebenenfalls Ein- und Ausschleußstationen für den oder die Werkstückträger 21 oder das Werkstück aufweisen kann. Dieses Antriebsmodul 11 umfasst ein Grundgestell 14, an welchem zwei parallel zueinander ausgerichtete Tragrahmen 16 angeordnet sind. Solche Tragrahmen 16 können aus gezogenen Profilen, insbesondere Aluminiumprofilen, ausgebildet sein. An den einander zuweisenden Innenseiten 17 des Tragrahmens 16 sind jeweils Laufrollen 19 vorgesehen, entlang denen ein oder mehrere Werkstückträger 21 verfahrbar aufgenommen sind. Zum Bewegen der Werkstückträger 21 in Transportrichtung 22 ist im Antriebsmodul 11 ein Antrieb 24 vorgesehen, der über ein Getriebe 25 eine Antriebswelle 26 antreibt, welche über ein Zwischenzahnrad 27 oder Antriebszahnrad 27 ein Antriebsmoment auf hintereinander im Tragrahmen 16 angeordnete Friktionsantriebe 29 überträgt. Alternativ kann der Antrieb 24 auch direkt ein Zwischenzahnrad 27 antreiben. Zwischen jedem Friktionsantrieb 29 ist ein Zwischenzahnrad 27 angeordnet, so dass alle hintereinander angeordnete Friktionsantriebe 29, welche jeweils eine Laufrolle 19 aufnehmen, unmittelbar miteinander antriebsverbunden sind. Alternativ können anstelle eines Antriebszahnrades und Zwischenzahnrades auch andere Antriebselemente vorgesehen sein, die durch Reib- und/oder Formschluss Antriebsmomente übertragen. Die Friktionsantriebe 29 sind im Ausführungsbeispiel gemäß Figur 1 nur in einem der beiden Tragrahmen 16 vorgesehen. Alternativ können diese auch in beiden Tragrahmen 16 angeordnet sein, so dass der auf den Laufrollen 19 aufliegende Werkstückträger 21 an beiden Schmalseiten angetrieben wird.

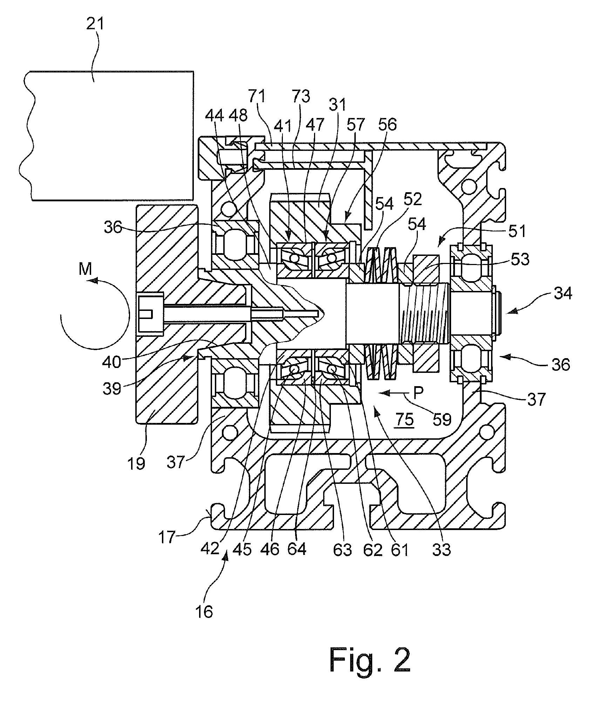

In Figur 2 ist eine schematische Schnittansicht entlang der Linie I-I gemäß Figur 1 des Friktionsantriebes 29 dargestellt. Der Friktionsantrieb umfasst ein Antriebselement 31, welches von dem Zwischenzahnrad 27 angetrieben wird. Das Antriebsmoment des Antriebselementes 31 wird durch eine Momentenbegrenzungseinrichtung 33 auf ein Abtriebselement 34 übertragen, welche mittels jeweils eines Lagers 36 in Seitenwangen 37 des Tragrahmens 16 drehbar gelagert ist. Das Abtriebselement 34 ist bevorzugt als Welle ausgebildet, welche an einem stirnseitigen Ende einen Aufnahmeabschnitt 39 aufweist, an welchem die Laufrolle 19 anordenbar ist. Bevorzugt weist der Aufnahmeabschnitt 39 einen Spannkonus 40 auf, um die Rotationskräfte von dem Abtriebselement 34 auf die Laufrolle 19 zu übertragen, auf welcher der Werkstückträger 21 aufliegt.

Die Momentenbegrenzungseinrichtung 33 umfasst zumindest ein Wälzlager 41, welches mit einem Innenring 42 rotationsfest auf dem Abtriebselement 34 befestigt ist und an einer Schulter 44 anliegt. Ein Außenring 46 des Wälzlagers 41 nimmt das Antriebselement 31 auf, dessen Aufnahmeabschnitt 47 ebenfalls durch eine Schulter 48 begrenzt ist, an welcher der Außenring anliegt. Das Wälzlager 41 der Momentenbegrenzungseinrichtung 33 ist bevorzugt als Schräglager oder Kegelrollenlager oder dergleichen ausgebildet.

Zur Einstellung eines Übertragungsmomentes zwischen dem Antriebselement 31 und dem Abtriebselement 34 ist eine Spannvorrichtung 51 vorgesehen, welche vorzugsweise an dem Abtriebselement 34 angreift und auf einen Innenring 42 des Wälzlagers 41 wirkt. Zur Reibungsentkopplung zwischen der Spannvorrichtung 51 und der Momentenbegrenzungseinrichtung 33 ist eine Drehentkopplungsvorrichtung 56 vorgesehen, welche vorzugsweise als Wälzlager 57 ausgebildet ist. Dadurch kann beim Aufbringen einer axialen Spannkraft 59, das heißt, einer axialen Verschiebung des Außenrings 46 zum Innenring 42 des Wälzlagers 41, durch das Wälzlager 57 der Drehentkopplungseinrichtung 56 eine Reibungsentkopplung gegeben sein. Dadurch ist das einstellbare Übertragungsmoment durch das zumindest eine Wälzlager 41 der Momentenbegrenzungseinrichtung 33 bestimmt, sofern die Drehentkopplungsvorrichtung 56 durch ein Axialrollenlager als Wälzlager 57 ausgebildet ist. Bevorzugt ist das Wälzlager 57 der Drehentkopplungseinrichtung 56 baugleich zum Wälzlager 41 der Momentenbegrenzungseinrichtung 33 ausgebildet und spiegelbildlich dazu angeordnet, so dass die Drehentkopplungsvorrichtung 56 eine Doppelfunktion aufweist, das heißt zum einen eine Drehentkopplung zwischen der Spannvorrichtung 51 und der Momentenbegrenzungseinrichtung 33 übernimmt und zum anderen gleichzeitig auch bei der Einstellung des Übertragungsmomentes zwischen dem Antriebselement 31 und dem Abtriebselement 34 mitwirkt.

Die Spannvorrichtung 51 weist zumindest ein Federelement 52 auf, welches bevorzugt als Tellerfeder beziehungsweise ein Tellerfederpaket ausgebildet ist. Des Weiteren ist ein Einstellelement 53 vorgesehen, insbesondere eine Einstellschraube, welche an dem Abtriebselement 34 angreift. Zwischen dem Einstellelement 53 und dem Federelement 52 ist ein Druckstück 54 vorgesehen, welches ebenfalls zwischen dem Federelement 52 und einem Innenring 61 des Wälzlagers 57 angeordnet ist.

Aufgrund der Ausgestaltung der Drehentkopplungsvorrichtung 56 mit der zusätzlichen Funktion der Momentenbegrenzungseinrichtung 33 ist zwischen den beiden Wälzlagern 41 und 57 ein Distanzelement 64 angeordnet. Dadurch ergibt sich folgender Ablauf zur Einstellung eines Übertragungsmomentes, um bei einem Antriebsmoment, welches das Übertragungsmoment übersteigt, einen Freilauf zu erzielen:

Durch die Spannvorrichtung 51 wird mittels des Einstellelements 53 eine axiale Spannkraft gemäß Pfeil 59 erzeugt. Über das Druckstück 54 wird der Innenring 61 des Wälzlagers 57 beaufschlagt. Aufgrund der Geometrie des Innenrings 41 wirkt in axialer Richtung 59 eine Kraft auf die Wälzkörper 62, welche wiederum die Kraft auf den Außenring 63 des Wälzlagers 57 übertragen. Aufgrund des Distanzelementes 64 wird diese Axialkraft direkt auf den Außenring 46 des Wälzlagers 41 übertragen, wodurch eine Verspannung der Wälzkörper 45 zum Innenring 42 des Wälzlagers 41 erfolgt. Somit werden die Außenringe 63, 46 zu den Innenringen 61, 42 der Wälzlager 57, 41 in gleichem Maße axial verspannt, um das Übertragungsmoment einzustellen. Je stärker die axiale Verschiebung der Außenringe 46, 63 zu den Innenringen 61, 42 ist, desto größer ist das Übertragungsmoment, das heißt, desto später setzt der Freilauf ein.

Der Tragrahmen 16 ist bevorzugt nach oben offen ausgebildet und durch eine abnehmbare Abdeckung 71 geschlossen. Ergänzend ist eine weitere Schutzabdeckung 73 vorgesehen, welche sich längs des Tragrahmens 16 erstreckt. Diese Schutzabdeckung 73 überdeckt die Antriebselemente 31 und die Zwischenzahnräder 27 zum Schutz vor Verletzungen, so dass bei abgehobener Abdeckung 71 eine Zugänglichkeit zum Einstellelement 53 der Spannvorrichtung 51 gegeben ist. Bevorzugt ist im unteren Bereich 75 des Tragrahmens 16 ein Öl- oder Fettvorrat vorgesehen, um zumindest die Antriebselemente 31 und gegebenenfalls auch die Wälzlager 41, 57 sowie gegebenenfalls auch die Lager 36 zu schmieren.

Es versteht sich, dass die Funktion des Antriebselementes 31 und Abtriebselementes 34 auch vertauscht vorgesehen sein kann.

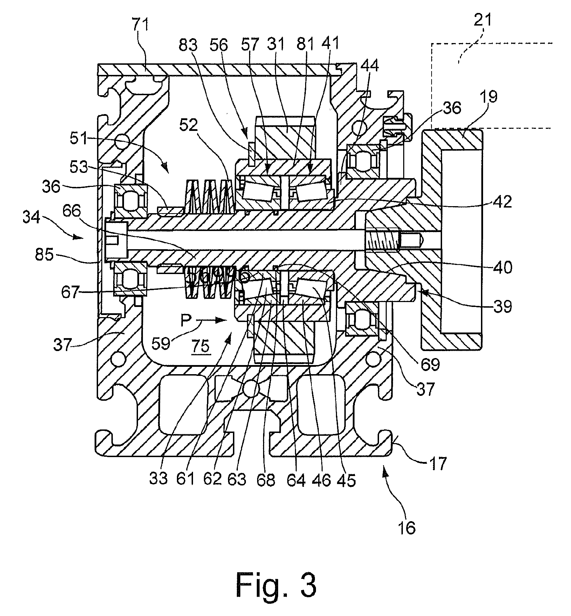

In Figur 3 ist eine alternative Ausführungsform des erfindungsgemäßen Friktionsantriebs 29 dargestellt. Der prinzipielle Aufbau und die Wirkungsweise entsprechen dem im Detail in Figur 2 dargestellten Friktionsantrieb, so dass in Bezug auf die Bauteile und deren Benennung sowie deren Funktionsweise darauf Bezug genommen wird. Nachfolgend wird auf die fakultativen Abweichungen eingegangen, die auch für die Ausführungsform in Figur 2 gelten können.

Zur Verbesserung der axialen Verschiebbarkeit des Wälzlagers 57 der Momentenbegrenzungseinrichtung 37 ist bevorzugt zwischen dem Innenring 61 des Wälzlagers 57 der Momentenbegrenzungseinrichtung 37 und einem Wellenabschnitt 66 des Abtriebselementes 34 ein Ringspalt 67 ausgebildet. Dieser kann beispielsweise dahingehend geschaffen werden, dass der Wellenabschnitt 66 mit einem Untermaß gegenüber einem Innendurchmesser des Innenrings 61 gefertigt wird. Bevorzugt sind in dem Ringspalt 67 zwei Dichtungselemente 68 mit Abstand zueinander angeordnet, die am Innenring 61 des Wälzlagers 57 angreifen und einen geschlossenen Ringspalt 67 bilden. Bevorzugt sind umlaufende Nuten 69 an dem Wellenabschnitt 66 vorgesehen, in denen die Dichtungselemente 68 eingesetzt und in ihrer Position gehalten werden. Ein dadurch entstehender Zwischenraum beziehungsweise geschlossener Ringspalt 67 ist bevorzugt mit einem Schmiermedium und/oder Korrosionsmedium, insbesondere einem Fett, gefüllt. Dadurch kann die axiale Verschiebbarkeit des Innenrings 41 und somit des Wälzlagers 57 gegenüber dem Wellenabschnitt 66 auch bei der Aufbringung von hohen Spannkräften über die Federelemente 52 aufrecht erhalten bleiben und eine definierte Stellbewegung beziehungsweise Axialverschiebung ermöglicht werden, ohne dass eine Klemmwirkung zwischen dem Innenring 61 und dem Abtriebselement 34, insbesondere dem Ventilabschnitt 66, entsteht. Zusätzlich dient das Einbringen des Schmier- und/oder Korrosionsmediums als Korrosionsschutz. Durch die Dichtungselemente 68 bleibt dieses Medium im Ringspalt 67.

Im Ausführungsbeispiel gemäß Figur 3 ist das Wälzlager 41, 57 beispielsweise als Kegelrollenlager dargestellt. Das Antriebselement 31 ist beispielsweise abweichend zu Figur 2 durch eine umlaufende Hülse 81 ausgebildet, welches beispielsweise ein Zahnrad oder sonstiges Antriebsrad 82 mittels eines Presssitzes oder dergleichen aufnimmt und das Antriebselement 31 bildet. Des Weiteren kann zwischen der Hülse 81 und dem Zahnrad 82 ein Stufensitz ausgebildet sein und deren Positionierung zueinander durch ein Sicherungselement 83 gesichert werden.

Des Weiteren kann alternativ zu Figur 2 die Spannvorrichtung 51, insbesondere die Federelemente 52, unmittelbar an einer Stirnseite des Innenringes 61 angreifen.

Analoges gilt für das Einstellelement 53, welches beispielsweise unmittelbar an den Federelementen 52 angreifen kann. Die Druckstücke 54 können somit wahlweise angeordnet sein oder entfallen.

Des Weiteren kann ein der Laufrolle 19 gegenüber liegendes Ende der Abtriebswelle 34 mit einem Verschlussdeckel 85 oder einer Kappe versehen sein, so dass das die Abtriebswelle 34 aufnehmende Lager 36 ebenfalls in einem geschlossenen Bereich vorgesehen ist, der beispielsweise mit einem Schmiermittel gefüllt sein kann.

Des Weiteren ist bei dieser Ausführungsform gemäß Figur 3 alternativ das Laufrad 19 von einer gegenüber liegenden Seite mittels einer Schraubverbindung über einen Spannkonus zur Abtriebswelle 34 fixiert, das heißt, ein Spannelement erstreckt sich vollständig innerhalb des Abtriebselementes 34. Dadurch kann von außen ein gegebenenfalls erforderlich werdendes Nachspannen der Laufrolle 19 zum Abtriebselement 34 nachträglich ermöglicht sein.

Das Prinzip des Friktionsantriebes 29 ist bei dieser Ausführungsform ebenso gegeben.

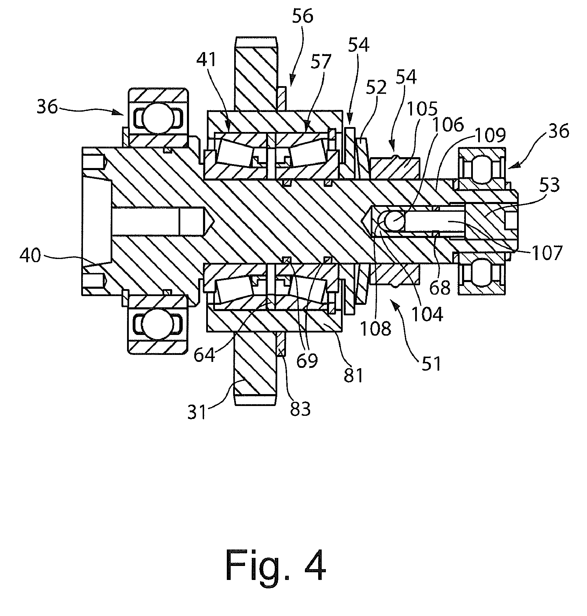

In Figur 4 ist eine weitere alternative Ausführungsform des Friktionsantriebs 29 zu Figur 2 dargestellt. Diese Ausführungsform kann auch eine alternative Ausführungsform zum Ausführungsbeispiel gemäß Figur 3 sein, welches dahingehend modifiziert ist, dass die Laufrolle 19 in Analogie zur Ausführungsform gemäß Figur 2 zum Abtriebselement 34 durch die Schraubverbindung montiert wird, so dass ein vollständiges Durchdringen des Abtriebselementes 34 durch ein Befestigungsmittel wie dies in Figur 3 dargestellt ist, nicht erforderlich ist. Diese Ausführungsform gemäß Figur 4 umfasst eine Entkopplungsvorrichtung 56, welche im Aufbau der in Figur 3 dargestellten und beschriebenen Entkopplungsvorrichtung 56 entspricht, so dass hierauf Bezug genommen wird.

Die Spannvorrichtung 51 ist dahingehend abweichend zur Ausführungsform in Figur 2 ausgebildet, dass das Einstellelement 53 nicht als eine Einstellschraube oder dergleichen ausgebildet ist, welche am Außenumfang des Abtriebselementes 34 angreift, sondern als eine Einstellschraube, die in eine stirnseitige Bohrung 104 in das Abtriebselement 34 eingreift. Dieses als Einstellschraube ausgebildete Einstellelement 53 wirkt auf ein Druckstück 54, welches aus einer Druckhülse 105 besteht, die durch den Außenumfang des Abtriebselementes 34 geführt und axial entlang der Längsachse des Abtriebselementes 34 verfahrbar ist. An der Druckhülse 105 greift ein Mitnahmestift 106 an, welcher eine Bohrung 104 des Abtriebselementes 34 durchquert. Das Einstellelement 53 kann unmittelbar an dem Mitnahmestift 106 angreifen. Bevorzugt ist dazwischen liegend ein Druckbolzen 107 angeordnet, so dass eine Drehbewegung der Einstellschraube bezüglich der axialen Verschiebebewegung über den Druckbolzen 107 drehentkoppelt wird. Der Mitnahmestift 106 des Druckstücks 104 ist in einer langlochförmigen Ausnehmung 108 geführt, die in einem durch die Bohrung 104 im Abtriebselement 34 gebildeten Hülsenabschnitt 109 vorgesehen ist und sich entlang der Längsachse des Abtriebselementes 34 erstreckt. Der Druckbolzen 107 ist bevorzugt mit einem Dichtelement 68 versehen, welches einen Spalt zwischen einem Außenumfang des Druckbolzens 107 und der Bohrung 104 abdichtet, so dass gegebenenfalls ein die Entkopplungsvorrichtung 56 umgebendes Schmiermittel nicht außerhalb des Tragrahmens 16 gelangen kann.

Bei einer Betätigung der Einstellschraube in die Bohrung hinein wird der Mitnahmestift 106 über den Druckbolzen 107 in Richtung auf die Entkopplungsvorrichtung 56 bewegt, so dass die Druckhülse 105 auf das Federelement 52 wirkt, welches beispielsweise als Tellerfeder ausgebildet ist. Der Außenumfang des Federelementes 52 greift bevorzugt an einem Druckstück 54 an, welches derart ausgebildet ist, dass einerseits das als Tellerfeder ausgebildete Federelement 52 mit dessen Außenumfang angreifen kann und andererseits die axiale Spannkraft auf den Innenring 42 des Wälzlagers 41 wirkt.

Durch die langlochförmige Ausnehmung 108 kann eine Wegbegrenzung der Spannvorrichtung 51 gegeben sein. Dadurch ist zum einen eine Kraftbegrenzung gegeben, sofern der Mitnahmestift 106 an einem Endabschnitt der langlochförmigen Ausnehmung anliegt, der zur Entkopplungsvorrichtung 56 weist. Andererseits kann gleichzeitig auch eine maximale Drehmomentbegrenzung des Friktionsantriebes 28 gegeben sein.

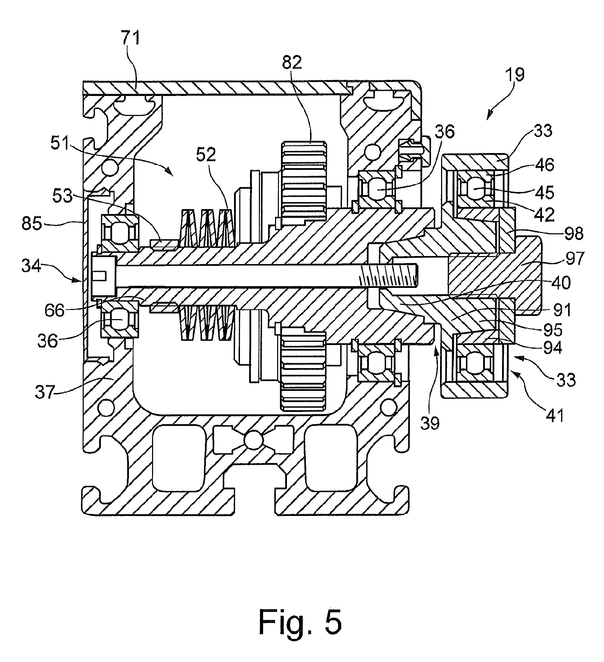

In Figur 5 ist eine weitere alternative Ausführungsform des erfindungsgemäßen Friktionsantriebs 29 dargestellt. Der prinzipielle Aufbau und die Wirkungsweise entsprechen dem Friktionsantrieb 29 gemäß den Figuren 2 und 3, so dass im Hinblick auf die Anordnung und Lagerung einer Abtriebswelle 34 im Grundgestell 14 als auch bezüglich der Aufnahme der Spannvorrichtung 51 auf die Figur 3 Bezug genommen wird. Das Zahnrad 82 ist bei dieser Ausführungsform unmittelbar auf den Wellenabschnitt 66 der Abtriebswelle 34 positioniert. Dadurch wird die Antriebskraft über das Zahnrad 82 auf die Abtriebswelle 34 übertragen und von dort auf eine Laufrolle 19, die von den bisherigen Ausführungsbeispielen abweicht und nachfolgend im Detail beschrieben ist. Diese Laufrolle umfasst einen Grundkörper 91, welcher über einen Spannkonus 14 verfügt, der auch aus Figur 3 bekannt ist. Zwischen dem Grundkörper 91 der Laufrolle 19 und einen Außenumfang, über welchen der Werkstückträger 21 angetrieben wird, umfasst die Laufrolle die Momentenbegrenzungseinrichtung 33. Diese ist beispielsweise als Wälzlager 41 mit einem Innenring 42 und einem Außenring 46 sowie einem dazwischen angeordneten Wälzkörper 45 ausgebildet. Diese Momentenbegrenzungseinrichtung stellt gleichzeitig auch eine Drehentkopplungsvorrichtung 56 dar. Bei dieser Ausführungsform fallen diese beiden zusammen. Alternativ können anstelle von einem Wälzlager 41 auch zwei oder drei Wälzlager nebeneinander angeordnet sein, die jedoch jeweils dieselbe Funktion erfüllen. Hierbei handelt es sich beispielsweise um ein Einrollenkugellager.

Die Momentenbegrenzungseinrichtung umfasst des Weiteren einen äußeren Spannring 93 sowie einen inneren Spannring 94, zwischen denen das Wälzlager 41 angeordnet ist. Die Spannvorrichtung 51 ist abweichend zur Ausführungsform gemäß den Figuren 2 und 3 ausgebildet und ermöglicht über zumindest ein Spannelement 95 das Aufbringen einer radialen Spannkraft. Hierzu ist das Spannelement 95 als Klemm- oder Spannkonus ausgebildet, der auf dem Grundkörper 91 der Laufrolle 19 aufsetzbar oder vorteilhafterweise unmittelbar an dem Grundkörper 91 als eine Schrägfläche angeformt ist, so dass der innere Spannring 94 mit einer keilförmigen Außenumfangsfläche daran angreift und den Klemmkonus bildet. Über ein Stellelement 97 und eine Spannscheibe 98 wird das Spannelement 95 beziehungsweise der innere Spannring 94 gegeneinander verkeilt, wodurch eine radiale Pressverbindung zwischen dem äußeren Spannring 93 dem inneren Spannring 94 erzeugt wird. Dadurch wird die Reibung im Wälzlager 41 erhöht beziehungsweise ist einstellbar. Anstelle eines Klemmkonus gemäß dem Ausführungsbeispiel können weitere Vorrichtungen zur Aufbringung einer radialen Spannkraft zur Erzeugung einer radialen Spannung des inneren zum äußeren Spannrings 93, 94 eingesetzt werden.

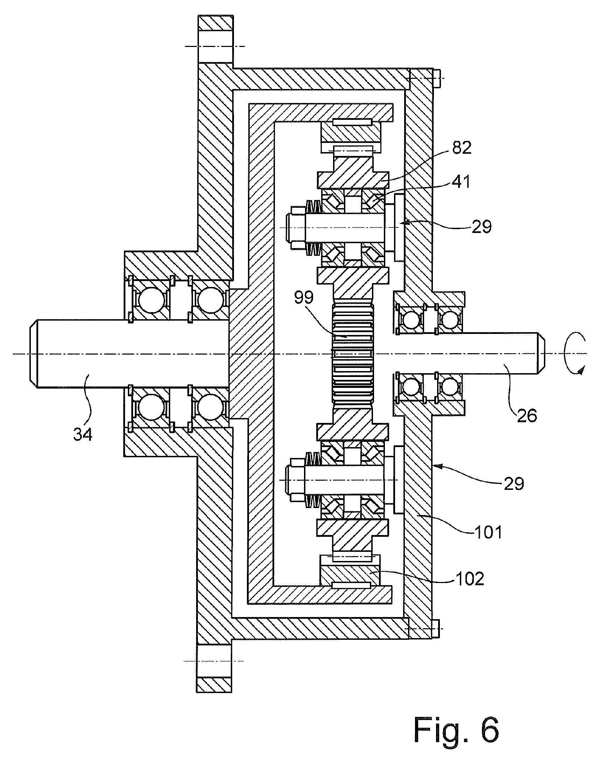

In Figur 6 ist eine weitere alternative Ausführungsform eines Friktionsantriebs 29 dargestellt. Dabei sind mehrere Friktionsantriebe 29 aneinander gereiht und wirken gleichzeitig, so dass zwischen einer Antriebswelle 26 und einer Abtriebswelle 34 ein Friktionsmoment einstellbar ist. Bei diesem Ausführungsbeispiel werden Friktionsantriebe gemäß Figur 2 eingesetzt, welche nach Art eines Planetengetriebes zueinander positioniert werden. Die Antriebswelle 26 nimmt ein Zahnrad 99 auf, an welchem das Zahnrad 82 des Friktionsantriebs 29 angreift, wobei beispielsweise zwei Friktionsantriebe 29 an einer Gehäusewand 101 feststehend angeordnet sind. Über ein Außenzahnrad 102, welches mit der Abtriebswelle 34 verbunden ist, wird das über die Antriebswelle eingeleitete Eingangsmoment übertragen, wobei durch die Anordnung der Friktionsantriebe 29 das maximale Antriebsmoment durch die Friktionsantriebe 29 begrenzt ist. Durch eine solche Anordnung von mehreren Friktionsantrieben 29 zueinander kann der maximale Einstellbereich der Friktionsmomente vergrößert sein. Die in Figur 6 dargestellte Ausführungsform kann auch Friktionsantriebe gemäß Figur 3 umfassen.

## Patentansprüche

1. Friktionsantrieb zur Kraftübertragung, insbesondere für eine Transportfördereinrichtung, mit einem Antriebselement (31) und einem Abtriebselement (34) und mit einer dazwischen wirkenden Momentenbegrenzungseinrichtung (33), welche ein von dem Antriebselement (31) eingeleitetes Antriebsmoment bis zu einem mittels der Momentenbegrenzungseinrichtung (33) einstellbaren Übertragungsmoment auf das Abtriebselement (34) überträgt und bei einem über das eingestellte Übertragungsmoment hinausgehenden Antriebsmoment einen Freilauf erzeugt, und welche zumindest ein Wälzlager (41) mit einen Innenring (42) und einen Außenring (46) sowie dazwischen angeordnete Wälzkörper (45) umfasst, sowie eine Spannvorrichtung (51), durch welche der Innenring und der Außenring des zumindest einen Wälzlagers (41) der Momentenbegrenzungseinrichtung (33) in axialer Richtung gegeneinander verschiebbar sind oder in radialer Richtung zueinander verspannbar sind und ein Übertragungsmoment einstellbar ist und zwischen der Spannvorrichtung (51) und der Momentenbegrenzungseinrichtung (33) eine Drehentkopplungsvorrichtung (56) vorgesehen ist, wobei das zumindest eine Wälzlager (57) der Drehentkopplungseinrichtung (56) mit seinem Innenring (61) axial verschiebbar durch die Spannvorrichtung (51) angeordnet ist, **dadurch gekennzeichnet, dass** zwischen dem Innenring (61) des Wälzlagers (57) der Momentenbegrenzungseinrichtung (33) und einem Wellenabschnitt (66) des Antriebselementes (34) ein Ringspalt (67) vorgesehen ist, in welchem zumindest zwei mit Abstand zueinander angeordnete Dichtungselemente (68) angeordnet sind.

2. Friktionsantrieb nach Anspruch 1, **dadurch gekennzeichnet, dass** die Spannvorrichtung (51) zumindest ein Federelement (52) und ein Einstellelement (53) aufweist, durch welches die Vorspannkraft in axialer oder radialer Richtung auf den Innenring (42) oder Außenring (46) des Wälzlagers (41) der Momentenbegrenzungseinrichtung (33) einstellbar ist.

3. Friktionsantrieb nach Anspruch 2, **dadurch gekennzeichnet, dass** die Spannvorrichtung (51) auf oder in dem Abtriebselement (34) angeordnet ist und das Einstellelement (53) an oder in dem Abtriebselement (34) in axialer Richtung des Abtriebselementes (34) einstellbar angreift.

4. Friktionsantrieb nach einem der vorhergehenden Ansprüche, **dadurch gekennzeichnet, dass** das zumindest eine Wälzlager (41) der Momentenbegrenzungseinrichtung (33) mit dem Innenring (42) rotationsfest auf dem Abtriebselement (34) angeordnet ist und an einer Schulter (44) des Abtriebselements (34) anliegt und mit seinem Außenring (46) an einer Schulter (48) des Antriebselementes (31) anliegt.

5. Friktionsantrieb nach Anspruch 1, **dadurch gekennzeichnet, dass** die Wälzlager (41,57) der Momentenbegrenzungseinrichtung (33) und Drehentkopplungseinrichtung (56) als Schrägkugellager, als radial vorgespanntes Kugellager, als Rollenlager oder Kegelrollenlager ausgebildet sind, welche benachbart und spiegelbildlich zueinander angeordnet sind.

6. Friktionsantrieb nach Anspruch 1, **dadurch gekennzeichnet, dass** das Antriebselement (31) als Antriebszahnrad ausgebildet ist, welches von einem Zwischenzahnrad (27) oder einem Antrieb (24) angetrieben ist.

7. Friktionsantrieb nach einem der vorhergehenden Ansprüche, **dadurch gekennzeichnet, dass** dieser mit weiteren Friktionsantrieben (29) in einem Tragrahmen (16) einer Transportfördereinrichtung vorgesehen und vorzugsweise zwischen jedem Friktionsantrieb (39) ein Zwischenrad (27) angeordnet ist.

8. Friktionsantrieb nach Anspruch 1, **dadurch gekennzeichnet, dass** das zumindest eine Dichtungselement (68) in einer umlaufenden Nut (69) des Wellenabschnitts (66) angeordnet ist und vorzugsweise gegenüber dem Außenumfang des Wellenabschnitts (66) geringfügig hervorsteht.

9. Friktionsantrieb nach Anspruch 1, **dadurch gekennzeichnet, dass** in dem durch die Dichtungselemente (68) begrenzten Ringspalt (67) ein Schmier- und/oder Korrosionsmedium vorgesehen ist.

10. Friktionsantrieb nach Anspruch 1, **dadurch gekennzeichnet, dass** die Momentenbegrenzungseinrichtung (33) und eine Drehentkopplungseinrichtung (56) vorgesehen sind, die durch zumindest ein gemeinsames Gleit- oder Wälzlager (41) ausgebildet sind.

11. Friktionsantrieb nach Anspruch 10, **dadurch gekennzeichnet, dass** die Spannvorrichtung (51) durch einen äußeren und einen inneren Spannring (93, 94) gebildet ist, zwischen denen das zumindest eine Gleit- oder Wälzlager (41) der Momentenbegrenzungseinrichtung (33) positionierbar ist und an dem äußeren oder inneren Spannring (93, 94) zumindest ein Spannelement (95) angreift, welches eine radiale Verspannung zwischen dem inneren und äußeren Spannring (93, 94) erzeugt.

12. Friktionsantrieb nach Anspruch 10, **dadurch gekennzeichnet, dass** das zumindest eine Spannelement (95) als Klemm- oder Spannkonus oder mit einer Übermaßpassung ausgebildet ist.

13. Friktionsantrieb nach einem der vorhergehenden Ansprüche, **dadurch gekennzeichnet, dass** mehrere aneinander gereihte Momentenbegrenzungseinrichtungen (29), insbesondere in Form eines Planetengetriebes, vorgesehen sind.

14. Friktionsantrieb nach einem der vorhergehenden Ansprüche, **dadurch gekennzeichnet, dass** das Einstellelement (53) als Einstellschraube ausgebildet ist, welche in einer stirnseitigen Bohrung (104) des Abtriebselementes (34) angeordnet ist und ein als Druckhülse (105) mit einem Mitnahmestift (106) ausgebildetes Druckstück (54) in axialer Richtung verschiebbar betätigt.

15. Friktionsantrieb nach Anspruch 14, **dadurch gekennzeichnet, dass** zwischen dem Mitnahmestift (106) und der Einstellschraube ein Druckbolzen (107) vorgesehen ist, der vorzugsweise ein Dichtungselement (68) aufweist und einen Führungsspalt zwischen der Bohrung (104) und dem Druckbolzen (107) abdichtet.

## Claims

1. Friction drive for force transmission, in particular for a transport conveying device, having a drive element (31) and an output element (34) and having a torque-limiting device (33) acting therebetween, which transmits a drive torque introduced by the drive element (31) up to a transmission torque, which is able to be set by means of the torque-limiting device (33), to the output element (34) and generates free running for a drive torque which exceeds the set transmission torque, and which comprises at least one rolling bearing (41) having an inner race (42) and an outer race (46) as well as rolling bodies (45) arranged therebetween, as well as a clamping device (51), using which the inner race and the outer race of the at least one rolling bearing (41) of the torque-limiting device (33) are displaceable towards one another in the axial direction or are clampable to each other in the radial direction and a transmission torque is settable, wherein a torsional isolation device (56) is provided between the clamping device (51) and the torque-limiting device (33), wherein the at least one rolling bearing (57) of the torsional isolation device (56) is arranged to be axially displaceable with its inner ring (61), **characterised in that** an annular gap (67) is provided between the inner race (61) of the rolling bearing (57) of the torque-limiting device (33) and a shaft section (66) of the drive element (34), at least two sealing elements (68) which are arranged at a distance to each other being arranged in said annular gap (67).

2. Friction drive according to claim 1, **characterised in that** the clamping device (51) has at least one spring element (52) and an adjusting element (53), by which the pre-tensioning force is able to be set in the axial or radial direction on the inner race (42) or outer race (46) of the rolling bearing (41) of the torque-limiting device (33).

3. Friction drive according to claim 2, **characterised in that** the clamping device (51) is arranged on or in the output element (34) and the adjusting element (53) engages with or in the output element (34) in the axial direction of the output element (34).

4. Friction drive according to one of the preceding claims, **characterised in that** the at least one rolling bearing (41) of the torque limiting device (33) having the inner race (42) is arranged to be fixed in terms of rotation on the output element (34) and abuts on a shoulder (44) of the output element(34).

5. Friction drive according to claim 1, **characterised in that** the rolling bearing (41, 57) of the torque-limiting device (33) and torsional isolation device (56) are formed as a contact ball bearing, as a radially pre-tensioned ball bearing, as a roller bearing or tapered roller bearing, which are arranged to be adjacent to each other and a mirror image of each other.

6. Friction drive according to claim 1, **characterised in that** the drive element (31) is formed as a drive gear wheel which is driven by an intermediate gear wheel (27) or a drive (24).

7. Friction drive according to one of the preceding claims, **characterised in that** this is provided with further friction drives (29) in a supporting frame (16) of a transport conveying device and preferably an intermediate wheel (27) is arranged between each friction drive (39).

8. Friction device according to claim 1, **characterised in that** the at least one sealing element (68) is arranged in a circumferential groove (69) of the shaft section (66) and preferably protrudes slightly with respect to the outer periphery of the shaft section (66).

9. Friction drive according to claim 1, **characterised in that** a lubricant and/or corrosive medium is provided in the annular gap (67) limited by the sealing elements (68).

10. Friction drive according to claim 1, **characterised in that** the torque-limiting device (33) and a torsional isolation device (56) are provided which are formed by at least one mutual sliding or rolling bearing (41).

11. Friction drive according to claim 10, **characterised in that** the clamping device (51) is formed by an outer and an inner clamping ring (93, 94), between which the at least one sliding or rolling bearing (41) of the torque-limiting device (33) is able to be positioned and at least one clamping element (95) engages with the outer or inner clamping ring (93, 94), which generates a radial clamping between the inner and outer clamping ring (93, 94).

12. Friction drive according to claim 10, **characterised in that** the at least one clamping element (95) is formed as a tapered or clamping cone or having an interference fit.

13. Friction drive according to one of the preceding claims, **characterised in that** several torque-limiting devices (29) which are aligned next to each other are provided, in particular in the form of a planetary gear.

14. Friction drive according to one of the preceding claims, **characterised in that** the adjusting element (53) is formed as an adjusting screw which is arranged in a front-side borehole (104) of the output element (34) and a pressure piece (54) formed as a pressure sleeve (105) having a drive pin (106) operates displaceably in the axial direction.

15. Friction drive according to claim 14, **characterised in that** a pressure bolt (107) is provided between the drive pin (106) and the adjusting screw, which preferably has a sealing element (68) and seals a guiding gap between the borehole (104) and the pressure bolt (107).

## Revendications

1. Entraînement par friction servant à la transmission de force, en particulier pour un dispositif transporteur, avec un élément d'entraînement (31) et un élément entraîné (34) et avec un dispositif limiteur de couple (33) lequel agit entre ces derniers et transmet un couple d'entraînement généré par l'élément d'entraînement (31) à l'élément entraîné (34), et ce jusqu'à atteindre un couple de transmission donné qui peut être réglé au moyen du dispositif limiteur de couple (33), et lequel déclenche un fonctionnement en roue libre lorsqu'un couple d'entraînement dépasse le couple de transmission réglé, et lequel comprend au moins un palier à roulement (41) pourvu d'une bague intérieure (42) et d'une bague extérieure (46) et, disposé entre ces dernières, des corps de roulement (45), ainsi qu'un dispositif de serrage (51) grâce auquel la bague intérieure et la bague extérieure dudit au moins un palier à roulement (41) du dispositif limiteur de couple (33) peuvent être déplacées l'une contre l'autre en sens axial ou serrées l'une par rapport à l'autre en sens radial et grâce auquel un couple de transmission peut être réglé, et dans lequel entraînement par friction est prévu un dispositif de découplage de couple (56) entre le dispositif de serrage (51) et le dispositif limiteur de couple (33), ledit au moins un palier à roulement (57) du dispositif de découplage de couple (56) étant disposé, par le biais du dispositif de serrage (51), de manière à pouvoir se déplacer axialement avec sa bague intérieure (61), **caractérisé en ce qu'**entre la bague intérieure (61) du palier à roulement (57) du dispositif limiteur de couple (33) et une partie d'arbre (66) de l'élément d'entraînement (34) est prévue une fente annulaire (67) dans laquelle sont disposés au moins deux éléments d'étanchéité (68) à une distance donnée l'un de l'autre.

2. Entraînement par friction selon la revendication 1, **caractérisé en ce que** le dispositif de serrage (51) présente au moins un élément élastique (52) et un élément de réglage (53) grâce auquel il est possible de régler la force de précontrainte exercée en sens axial ou radial sur la bague intérieure (42) ou la bague extérieure (46) du palier à roulement (41) du dispositif limiteur de couple (33).

3. Entraînement par friction selon la revendication 2, **caractérisé en ce que** le dispositif de serrage (51) est disposé sur ou dans l'élément entraîné (34) et **en ce que** l'élément de réglage (53) appuie de manière réglable sur ou dans l'élément entraîné (34), et ce en sens axial dudit élément entraîné (34).

4. Entraînement par friction selon l'une quelconque des revendications précédentes, **caractérisé en ce que** ledit au moins un palier à roulement (41) du dispositif limiteur de couple (33) est disposé sur l'élément entraîné (34) de manière à tourner solidairement avec la bague intérieure (42) et repose sur un épaulement (44) de l'élément entraîné (34) et, avec sa bague extérieure (46), sur un épaulement (48) de l'élément d'entraînement (31).

5. Entraînement par friction selon la revendication 1, **caractérisé en ce que** les paliers à roulement (41, 57) du dispositif limiteur de couple (33) et du dispositif de découplage de couple (56) sont réalisés sous forme de roulement à billes oblique, de roulement à billes à précharge radiale, de roulement à rouleaux ou de roulement à rouleaux coniques, lesquels sont disposés de manière contiguë l'un à l'autre et en miroir l'un par rapport à l'autre.

6. Entraînement par friction selon la revendication 1, **caractérisé en ce que** l'élément d'entraînement (31) est réalisé sous forme de roue dentée d'entraînement (27) qui est entraînée par une roue dentée intermédiaire (27) ou par un entraînement (24).

7. Entraînement par friction selon l'une quelconque des revendications précédentes, **caractérisé en ce que** ce dernier est prévu avec d'autres entraînements par friction (29) dans un cadre porteur (16) d'un dispositif transporteur et **en ce qu'**une roue intermédiaire (27) est disposée de préférence entre chaque entraînement par friction (39).

8. Entraînement par friction selon la revendication 1, **caractérisé en ce que** ledit au moins un élément d'étanchéité (68) est disposé dans une rainure circonférentielle (69) de la partie d'arbre (66) et fait de préférence légèrement saillie par rapport à la circonférence extérieure de la partie d'arbre (66).

9. Entraînement par friction selon la revendication 1, **caractérisé en ce qu'**un fluide lubrifiant et/ou anticorrosif est prévu dans la fente annulaire (67) délimitée par les éléments d'étanchéité (68).

10. Entraînement par friction selon la revendication 1, **caractérisé en ce qu'**il est prévu un dispositif limiteur de couple (33) et un dispositif de découplage de couple (56), lesquels sont formés par au moins un palier à glissement ou à roulement commun (41).

11. Entraînement par friction selon la revendication 10, **caractérisé en ce que** le dispositif de serrage (51) est formé par un anneau de serrage extérieur et un anneau de serrage intérieur (93, 94) entre lesquels peut être positionné ledit au moins un palier à glissement ou à roulement (41) du dispositif limiteur de couple (33) et **en ce qu'**au moins un élément de serrage (95) générant une tension radiale entre l'anneau de serrage intérieur et l'anneau de serrage extérieur (93, 94) appuie respectivement contre l'anneau de serrage extérieur ou intérieur (93, 94).

12. Entraînement par friction selon la revendication 10, **caractérisé en ce qu'**au moins un élément de serrage (95) est réalisé sous forme de cône de blocage ou de serrage ou avec un ajustement avec serrage.

13. Entraînement par friction selon l'une quelconque des revendications précédentes, **caractérisé en ce qu'**il est prévu plusieurs dispositifs limiteurs de couple (29) alignés les uns aux autres, en particulier sous la forme d'un engrenage planétaire.

14. Entraînement par friction selon l'une quelconque des revendications précédentes, **caractérisé en ce que** l'élément de réglage (53) est réalisé sous forme de vis de réglage qui est disposée dans un alésage frontal (104) de l'élément entraîné (34) et qui actionne un élément de pression (54) réalisé sous forme de manchon de pression (105) pourvu d'une tige d'entraînement (106) de manière à ce qu'il puisse se déplacer en sens axial.

15. Entraînement par friction selon la revendication 14, **caractérisé en ce qu'**entre la tige d'entraînement (106) et la vis de réglage est prévu un boulon de pression (107) qui présente de préférence un élément d'étanchéité (68) et rend étanche une fente de guidage située entre l'alésage (104) et le boulon de pression (107).
